## Europäisches Patentamt

## European Patent Office

## Office européen des brevets

(11) Publication number: **0 102 017**
**B1**

# (12) EUROPEAN PATENT SPECIFICATION

(45) Date of publication of patent specification: **16.01.91**

(51) Int. Cl.⁵: **B 61 L 25/02, B 61 L 3/00**

(21) Application number: **83108008.0**

(22) Date of filing: **12.08.83**

(54) Vehicle stopping position detecting system.

(30) Priority: **17.08.82 JP 143000/82**

(43) Date of publication of application:
**07.03.84 Bulletin 84/10**

(45) Publication of the grant of the patent:
**16.01.91 Bulletin 91/03**

(84) Designated Contracting States:
**DE FR**

(56) References cited:
**FR-A-2 187 591**
**US-A-3 813 538**
**US-A-3 958 783**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(72) Inventor: **Ohuchi, Eiichi**
**2-32, Kawasakicho**
**Akashi-shi (JP)**

(74) Representative: **Strehl, Peter, Dipl.-Ing. et al**
**Patentanwälte Strehl Schübel-Hopf Groening**
**Maximilianstrasse 54 Postfach 22 14 55**
**D-8000 München 22 (DE)**

Courier Press, Leamington Spa, England.

# EP 0 102 017 B1

## Description

The present invention relates to a vehicle stopping position detecting system and more particularly to a vehicle stopping position detecting system for detecting the stopping position of a vehicle capable of travelling and stopping as desired along a vehicle track as in the case of a new traffic system which allows the unattended operation of vehicles.

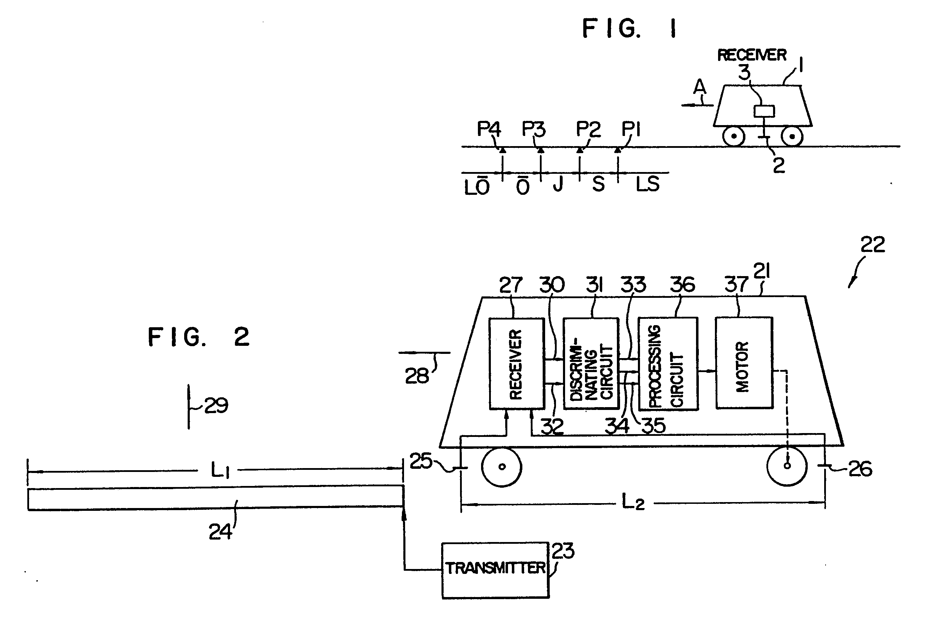

By the prior technology of the vehicle stopping position detecting systems, the stopping position of a vehicle can be detected in accordance with the number of times a point signal is received and this prior technology is shown in Fig. 1. In the Figure, a vehicle 1 is moved in the direction of an arrow A. As the vehicle 1 is moved, a vehicle antenna 2 passes through the respective points where ground elements $P_1$, $P_2$, $P_3$ and $P_4$ are arranged and consequently a point signal is applied from each of the ground elements $P_1$, $P_2$, $P_3$ and $P_4$ to a receiver 3 of the vehicle 1. Regions LS, S, J, $\overline{O}$ and $\overline{LO}$ respectively represent long-short stopping region, short stopping region, just fixed position stopping region, overrun stopping region and long-overrun stopping region and they are preliminarily determined. The following Table 1 shows the number of times a point signal is received by the vehicle antenna 2 in the regions LS, S, J, $\overline{O}$ and $\overline{LO}$, respectively, the discrimination of stopping positions, etc. Note that "1" represents the presence of a reception and "0" represents the absence of a reception in the reception of point signals.

Table 1

| Location of vehicle antenna 2 | Point signal | | | | No. of receptions of point signal | Stopped position dis-crimination |
|---|---|---|---|---|---|---|
| | $P_1$ | $P_2$ | $P_3$ | $P_4$ | | |
| LS | 0 | 0 | 0 | 0 | 0 | Long-short stopping |
| S | 1 | 0 | 0 | 0 | 1 | Short stopping |
| J | 1 | 1 | 0 | 0 | 2 | Just fixed position stopping |
| $\overline{O}$ | 1 | 1 | 1 | 0 | 3 | Overrun stopping |
| $\overline{LO}$ | 1 | 1 | 1 | 1 | 4 | Long-overrun stopping |

For instance, the vehicle 1 is in a stopped condition and the number of point signal receptions is 2, it can be discriminated that the stopped position of the vehicle 1 is in the region J and then the vehicle 1 is stopped at the just fixed position. However, since the stopped position is discriminated in accordance with the number of point signal receptions, the erroneous reception at any point signal results in an erroneous count and this in turn results in an erroneous discrimination. The erroneous count is either an over-count or a short-count. The short-count occurs when, for example, the vehicle 1 moves over the ground elements $P_1$ to $P_4$ at a relatively high speed and thus the level of signals changes too rapid to detect them as point signals. When the short-count is caused, the stopped position of the vehicle 1 is discriminated erroneously to be upstream than the actual stopped position in the direction of movement. The over-count occurs when, for example, the vehicle 1 comes to a stop in such a manner that the vehicle antenna 2 is located in the vicinity of the ground element $P_1$, $P_2$, $P_3$ or $P_4$ and then the vehicle 1 is rocked or due to the characteristics of the electric circuit of the receiver 3. When the over-count occurs, the stopped position of the vehicle 1 is discriminated erroneously to be downstream than the actual stopped position in the direction of movement. Also, if the vehicle 1 is at stopped condition and then power supply fails with no power failure countermeasure, the stopped position of the vehicle 1 will not be able to discriminate after the recovery of the power supply and the operation of the vehicle 1 will be impeded.

A vehicle stopping position detection system with the features recited in the first part of the patent claim is known from US—A—3,959,783. There, an antenna situated along a vehicle stopping area is supplied with an oscillatory signal so as to transmit a magnetic field with positions along the length of the

2

antenna at which the phase of the magnetic field reverses. The stopping position of the vehicle is determined by counting the number of times the phase of the signal received by vehicle antennas changes. The reliability of this system is prone to be impaired by electromagnetic noise.

FR—A—2,187,591 discloses a train control system in which the vehicle is continuously, via an array of antennas disposed along the railway line, in contact with a control station. Means for detecting the vehicle stopping position are not disclosed.

It is an object of the present invention to provide a system which is capable of accurately and reliably detecting the stopping position of a vehicle. This object is met by the system characterized in the patent claim.

Preferred embodiments of the invention will now be described with reference to the drawings, in which

Fig. 1 referred to above is a simplified side view showing an example of a prior-technology stopping position detecting system,

Fig. 2 is a simplified side view showing a stopping position detecting system for explaining certain basic features used in embodiments of the invention,

Fig. 3 is a simplified view showing an embodiment of an on-vehicle stopping position detecting system according to the invention,

Fig. 4 is a specific circuit diagram of a discriminating circuit,

Figs. 5A to 5E are diagrams for explaining the discriminating operation,

Fig. 6 is a simplified view showing another embodiment of the ground stopping position detecting system according to the invention,

Fig. 7 is a simplified side view showing still another embodiment of the invention,

Fig. 8 is a simplified side view showing still another embodiment of the invention, and

Fig. 9 is a specific circuit diagram of a discriminating circuit.

According to Fig. 2, a stopping position detecting system for a vehicle 21 includes a transmitter 23, a single ground antenna 24, a plurality (two in the Figure) of vehicle antennas 25 and 26, and a receiver 27.

The ground antenna 24 has a ground antenna length $L_1$ extending along a travel direction 28 of the vehicle 21 which travels along a vehicle track (not shown) and the ground antenna 24 is disposed in correspondence to a stopping position where the vehicle 21 makes a stop at a station or the like. The ground antenna 24 is connected to the transmitter 23. The transmitter 23 applies a stopping position indicative signal to the ground antenna 24. Thus, the ground antenna 24 generates a raido wave indicative of the stopping position in a circumferential direction 29 which is perpendicular to the travel direction 28.

The vehicle antennas 25 and 26 are mounted on the vehicle 21 so as to provide a mounting interval $L_2$ in the travel direction 28. In this case, the mounting interval $L_2$ is selected $L_1 \geqq L_2$. The vehicle antennas 25 and 26 are connected to the receiver 27. Thus, the receiver 27 can receive the radio wave from the ground antenna 24 only when the vehicle antennas 25 and 26 are positioned within the area of the ground antenna length $L_1$.

The output generated in dependence on the presence or absence of reception of the radio wave through the ground antenna 24 and the vehicle antenna 25 is applied to a discriminating circuit 31 from the receiver 27 via a line 30. The output corresponding to the presence or absence of reception of the radio wave through the ground antenna 24 and the vehicle antenna 26 is applied to the discriminating circuit 31 from the receiver 27 via a line 32.

The discriminating circuit 31 makes a discrimination in accordance with the outputs from the receiver 27 through the lines 30 and 32 and the discrimination output is applied to a processing circuit 36 via lines 33, 34 or 35.

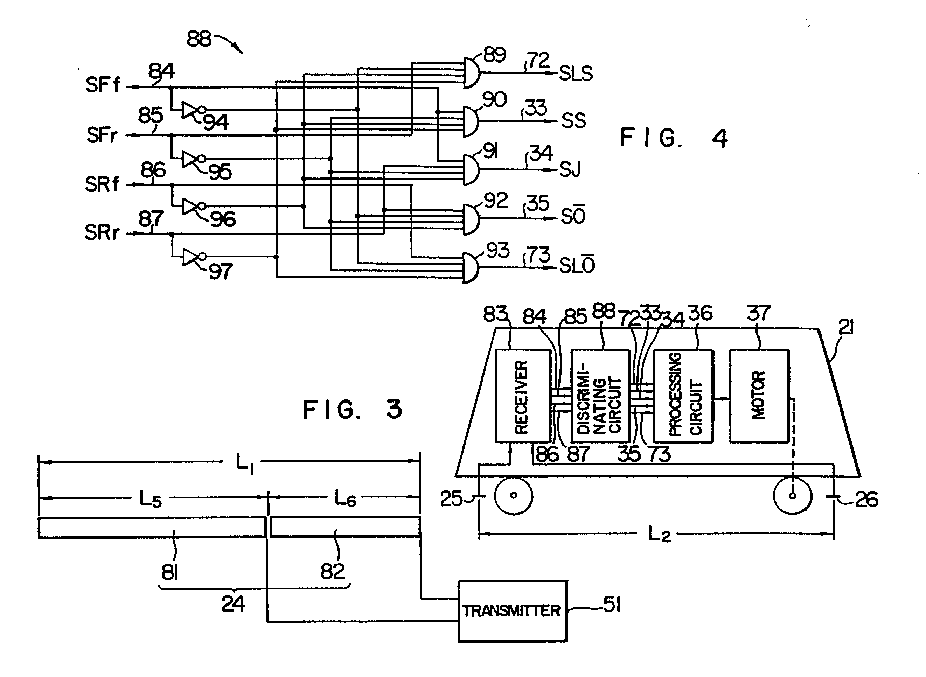

In the embodiment of the on-vehicle stopping position detecting system according to the invention as shown in Fig. 3, the component parts corresponding to those in Fig. 2 are designated by the same reference numerals. The vehicle antennas 25 and 26 of the mounting interval $L_2$ are mounted on the vehicle 21. The ground antenna 24 is divided into two sections, i.e., a ground antenna 81 of a ground antenna length $L_5$ and a ground antenna 82 of a ground antenna length $L_6$. There are relations $L_1 = L_5 + L_6$, $L_2 \leqq L_1$, $L_5 < L_2$ and $L_6 < L_2$. Signals differing from each other are applied to the ground antennas 81 and 82 from the transmitter 51.

A receiver 83 causes a line 84 to go to the high level "1" only when the wave from the ground antenna 81 is received through the vehicle antenna 25. Also, the receiver 83 causes a line 85 to go to the high level "1" only when the wave from the ground antenna 82 is received through the vehicle antenna 25. Also, the receiver 83 causes a line 86 to go to the high level "1" only when the wave from the ground antenna 81 is received through the vehicle antenna 26. Also, the receiver 83 causes a line 87 to go to the high level "1" only when the wave from the ground antenna 82 is received through the vehicle antenna 26. The lines 84, 85, 86 and 87 are all connected to a discriminating circuit 88.

A specific circuit diagram of the discriminating circuit 88 is shown in Fig. 4. The line 84, which receives an input signal $SF_f$, is connected to an input of AND gates 90 and 91, respectively, and it is also connected to an input of AND gates 89, 92 and 93, respectively, through an inverter circuit 94. The line 85, which receives an input signal $SF_r$, is connected to another input of the AND gate 89 and to another input of the AND gates 90, 91, 92 and 93, respectively, through an inverter circuit 95. The line 86, which receives an input signal $SR_f$, is connected to still another input of the AND gate 93 and to still another input of the AND gates 89, 90, 91 and 92, respectively, through an inverter circuit 96. The line 87, which receives an input signal $SR_r$, is

connected to the other input of the AND gates 91 and 92, respectively, and it is also connected to the other input of the AND gates 90 and 93, respectively through an inverter circuit 97.

The output of the AND gate 89 is connected to the line 72 which delivers an output signal SLS. The output of the AND gate 90 is connected to the line 33 which delivers an output signal SS. The ouput of the AND gate 91 is connected to the line 34 which delivers an output signal SJ. The output of the AND gate 92 is connected to the line 35 which delivers an output signal $\overline{SO}$. The output of the AND gate 93 is connected to the line 73 which delivers an ouput signal $SL\overline{O}$.

The following Table 2 shows the Boolean algebraic expressions and function tables for the outputs of the inverter circuits 94, 95, 96 and 97 and the AND gates 89, 90, 91, 92 and 93. The discrimination is effected in accordance with Table 2.

Table 2

| Output signal | Boolean algebraic expression | Input signal | | | | |
|---|---|---|---|---|---|---|
| | | $SF_f=0$, $SF_r=1$, $SR_f=SR_r=0$ | $SF_f=1$, $SF_r=0$, $SR_f=SR_r=0$ | $SF_f=1$, $SF_r=0$, $SR_f=0$, $SR_r=1$ | $SF_f=SF_r=0$, $SR_f=0$, $SR_r=1$ | $SF_f=SF_r=0$, $SR_f=1$, $SR_r=0$ |
| Inverter circuit 94 | $\overline{SF_f}$ | 1 | 0 | 0 | 1 | 1 |
| Inverter circuit 95 | $\overline{SF_r}$ | 0 | 1 | 1 | 1 | 1 |
| Inverter circuit 96 | $\overline{SR_f}$ | 1 | 1 | 1 | 1 | 0 |
| Inverter circuit 97 | $\overline{SR_r}$ | 1 | 1 | 0 | 0 | 1 |
| AND gate 89 | $\overline{SF_f}\cdot SF_r\cdot\overline{SR_f}\cdot\overline{SR_r}=SLS$ | 1 | 0 | 0 | 0 | 0 |
| AND gate 90 | $SF_f\cdot\overline{SF_r}\cdot\overline{SR_f}\cdot\overline{SR_r}=SS$ | 0 | 1 | 0 | 0 | 0 |
| AND gate 91 | $SF_f\cdot\overline{SF_r}\cdot\overline{SR_f}\cdot SR_r=SJ$ | 0 | 0 | 1 | 0 | 0 |
| AND gate 92 | $\overline{SF_f}\cdot\overline{SF_r}\cdot\overline{SR_f}\cdot SR_r=S\overline{O}$ | 0 | 0 | 0 | 1 | 0 |
| AND gate 93 | $\overline{SF_f}\cdot\overline{SF_r}\cdot SR_f\cdot\overline{SR_r}=SL\overline{O}$ | 0 | 0 | 0 | 0 | 1 |

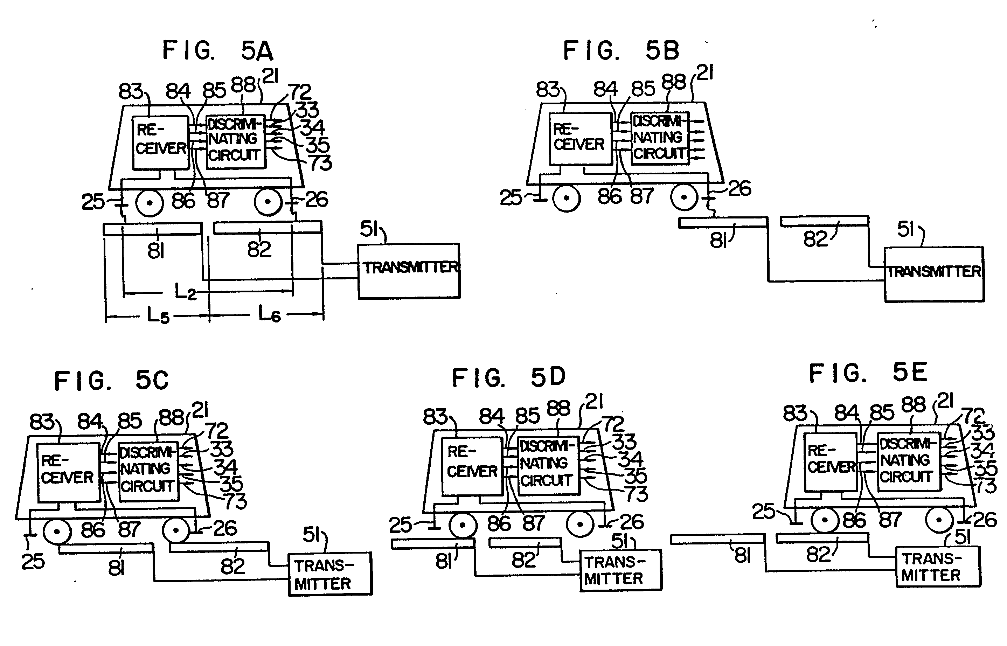

Assume that the vehicle 21 is stopped at the just fixed position. In this case, as shown in Fig. 5A, the vehicle 21 is stopped in such a manner that the vehicle antenna 25 is positioned within the area of the ground antenna length $L_5$ and also the vehicle antenna 26 is positioned within the area of the ground antenna length $L_6$. The receiver 83 receives the wave from the ground antenna 81 only through the vehicle antenna 25 and it also receives the wave from the ground antenna 82 only through the vehicle antenna 26, thus causing only the lines 84 and 87 to go to the high level "1". As a result, the discriminating circuit 88 makes a discrimination of "just fixed position stopping" and only the line 34 is caused to go to the high level "1".

Assume that the vehicle 21 is stopped to greatly overrun the fixed position. In this case, as shown in Fig. 5B, the vehicle 21 is stopped in such a manner that only the vehicle antenna 26 is positioned within the area of the ground antenna length $L_5$. The receiver 83 receives the wave from the ground antenna 81 only through the vehicle antenna 26 and thus only the line 86 is caused to go to the high level "1". As a result, the discriminating circuit 88 makes a discrimination of "long-overrun stopping" and only the line 73 is caused to go to the high level "1".

Assume that the vehicle 21 is stopped to overrun the fixed position. In this case, as shown in Fig. 5C, the vehicle 21 is stopped in such a manner that only the vehicle 26 is positioned within the area of the ground antenna length $L_6$. The receiver 83 receives the wave from the ground antenna 82 only through the vehicle antenna 26 and thus only the line 87 is caused to go to the high level "1". As a result, the discriminating circuit 88 makes a discrimination of "overrun stopping" and only the line 35 is caused to go to the high level "1".

Assume that the vehicle 21 is stopped short of the fixed position. In this case, as shown in Fig. 5D, the vehicle 21 is stopped in such a manner that only the vehicle antenna 25 is positioned within the area of the ground antenna length $L_5$. The receiver 83 receives the wave from the ground antenna 81 only through the vehicle antenna 25 and thus only the line 84 is caused to go to the high level "1". As a result, the discriminating circuit 88 makes a discrimination of "short stopping" and only the line 33 is caused to go to the high level "1".

Assume that the vehicle 21 is positioned greatly short of the fixed position. In this case, as shown in Fig. 5E, the vehicle 21 is stopped in such a manner that only the vehicle antenna 25 is positioned within the area of the ground antenna length $L_6$. The receiver 83 receives the wave from the ground antenna 82 only through the vehicle antenna 25 and only the line 85 is caused to go to the high level "1". As a result, the discriminating circuit 88 makes a discrimination of "long-short stopping" and thus only the line 82 is caused to go to the high level "1".

The following Table 3 shows the reception conditions of the receiver 83 from the ground antennas 81 and 82 through the vehicle antennas 25 and 26 and the discriminations of the discriminating circuit 88.

Table  3

| Reception condition | | | | Discrimination |
|---|---|---|---|---|
| Vehicle antenna 25 | | Vehicle antenna 26 | | |
| Signal from ground antenna 81 | Signal from ground antenna 82 | Signal from ground antenna 81 | Signal from ground antenna 82 | |
| 0 | 1 | 0 | 0 | Long-short stopping |
| 1 | 0 | 0 | 0 | Short stopping |
| 1 | 0 | 0 | 1 | Just fixed position stopping |
| 0 | 0 | 0 | 1 | Overrun stopping |
| 0 | 0 | 1 | 0 | Long-overrun stopping |

6

# EP 0 102 017 B1

The following Table 4 shows the long-short stopping position, the short stopping position, the just fixed stopping position, the overrun stopping position and the long-overrun stopping position and their region length in accordance with the ground antenna lengths $L_5$ and $L_6$ and the mounting interval $L_2$.

Table   4

| Stopping position region | Region length |
|---|---|
| Long-short stopping position | $L_6$ |
| Short stopping position | $L_2 - L_6$ |
| Just fixed stopping position | $L_5 + L_6 - L_2$ |
| Overrun stopping position | $L_2 - L_5$ |
| Long overrun stopping position | $L_5$ |

The stopping position information will be increased with an increase in the number of divisions of the ground antenna and a fine detailed setting of stopping position regions is ensured. Also, the ground antenna lengths $L_5$ and $L_6$ and the mounting interval $L_2$ can be selected as desired within the previously mentioned ranges. Therefore, the long-short stopping position region, the short stopping position region, the just fixed stopping position region, the overrun stopping position region and the long-overrun stopping position region can be preset as desired by suitably changing the ground antenna lengths $L_5$ and $L_6$ and the mounting interval $L_2$.

In accordance with still another embodiment of the invention, the same signal may be applied to the ground antennas 81 and 82 from the transmitter 51. In this case, the ground antennas 81 and 82 become effectively equal to the single ground antenna 24. Therefore, it is only necessary to replace the receiver 83 and the discriminating circuit 88 with the receiver 27 and the discriminating circuit 31 as in Fig. 2.

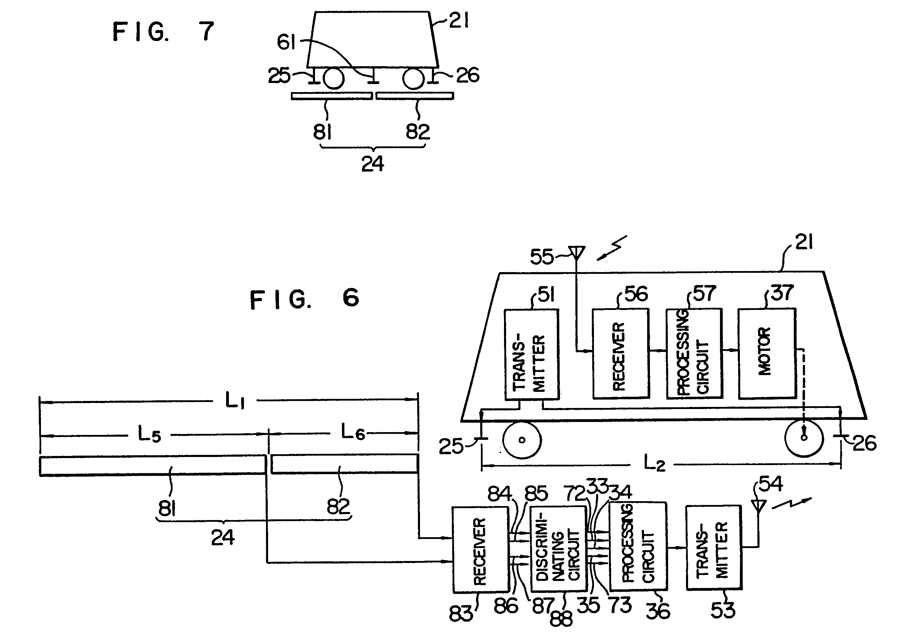

Fig. 6 is a simplified side view showing another embodiment of the ground stopping position detecting system according to the invention and the component parts corresponding to those in Figs. 2 and 3 are designated by the same reference numerals. This embodiment can be considered in correspondence to the on-vehicle stopping position detecting system shown in Fig. 3 and therefore the discrimination is made in the same manner as the on-vehicle stopping position detecting system of Fig. 3 thereby controlling the motor 37.

Fig. 7 is a simplified side view showing another embodiment of the invention and the component parts corresponding to those in Figs. 2, 3 and 6 are designated by the same reference numerals. What is to be noted with this embodiment is the use of the two divided ground antennas 81 and 82 and the three vehicle antennas 25, 61 and 26. With this embodiment, both the on-vehicle stopping position detecting system and the ground stopping position detecting system can be accomplished so as to perform the same discrimination and control as mentioned previously.

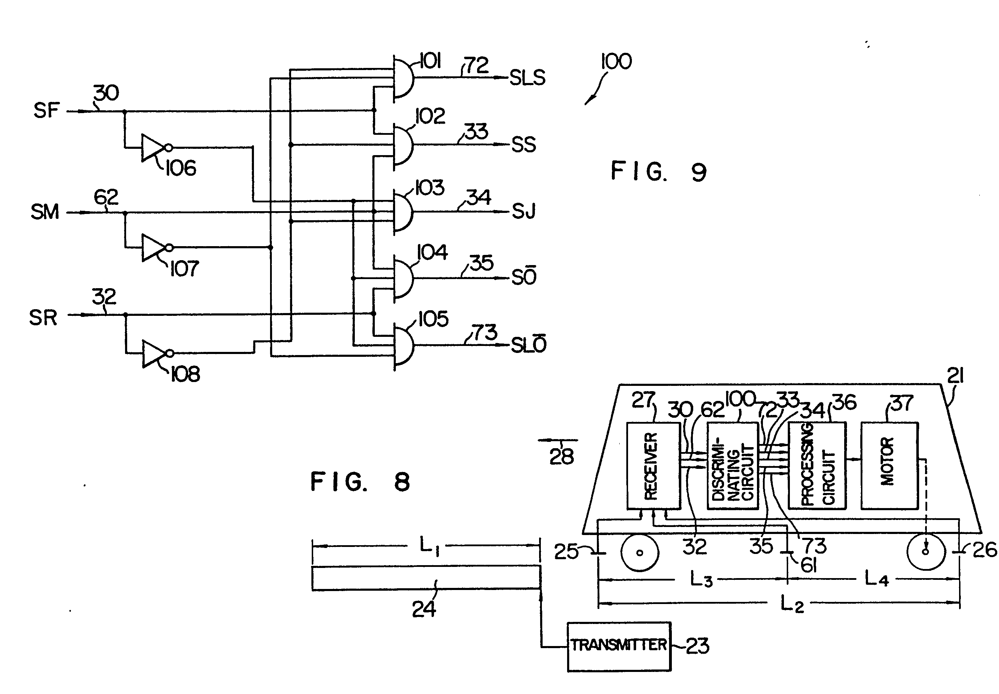

Fig. 8 is a simplified side view showing another embodiment of the on-vehicle detecting system according to the invention and the component parts corresponding to those in Figs. 2, 3, 6 and 7 are designated by the same reference numerals. What is to be noted with this embodiment is the fact that the ground antenna length of the ground antenna 24 is preset to $L_1$ which is less than the mounting interval $L_2$ and greater than the mounting intervals $L_3$ and $L_4$ ($L_2 = L_3 + L_4$, $L_2 \geqq L_1$, $L_1 \geqq L_3$, $L_1 \geqq L_4$).

In this embodiment, a discriminating circuit 100 is constructed as shown in Fig. 9. The line 30, which receives an input signal SF, is connected to an input of AND gates 101 and 102 respectively, and it is also connected to an input of AND gates 103, 104 and 105, respectively, through an inverter circuit 106. The line 62, which receives an input signal SM, is connected to another input of the AND gates 102, 103 and 104, respectively, and it is also connected to another input of the AND gates 101 and 105, respectively, through an inverter circuit 107. The line 32, which receives an input signal SR, is connected to the other input of the AND gates 104 and 105, respectively, and it is also connected to the other input of the AND gates 101, 102 and 103, respectively, through an inverter circuit 108.

The output of the AND gate 101 is connected to the line 72 which delivers an output signal SLS. The

7

output of the AND gate 102 is connected to the line 33 which delivers an output signal SS. The output of the AND gate 103 is connected to the line 34 which delivers an output signal SJ. The output of the AND gate 104 is connected to the line 35 which delivers an output signal $S\overline{O}$. The output of the AND gate 105 is connected to the line 73 which delivers an output signal $SL\overline{O}$.

The following Table 5 shows the Boolean algebraic expressions and function tables for the outputs of the inverter circuits 106, 107 and 108 and the AND gates 101, 102, 103, 104 and 105. The discrimination is effected in accordance with Table 5.

Table 5

| Output signal | Boolean algebraic expression | Input signal | | | | |
|---|---|---|---|---|---|---|
| | | SF=1, SM=SR=0 | SF=SR=1, SR=0 | SF=SR=0, SM=1 | SF=0, SM=SR=1 | SF=SM=0, SR=1 |
| Inverter circuit 106 | $\overline{SF}$ | 0 | 0 | 1 | 1 | 1 |
| Inverter circuit 107 | $\overline{SM}$ | 1 | 0 | 0 | 0 | 1 |
| Inverter circuit 108 | $\overline{SR}$ | 1 | 1 | 1 | 0 | 0 |
| AND gate 101 | $SF \cdot \overline{SM} \cdot \overline{SR} = SLS$ | 1 | 0 | 0 | 0 | 0 |
| AND gate 102 | $SF \cdot SM \cdot \overline{SR} = SS$ | 0 | 1 | 0 | 0 | 0 |
| AND gate 103 | $\overline{SF} \cdot SM \cdot \overline{SR} = SJ$ | 0 | 0 | 1 | 0 | 0 |
| AND gate 104 | $\overline{SF} \cdot SM \cdot SR = S\overline{O}$ | 0 | 0 | 0 | 1 | 0 |
| AND gate 105 | $\overline{SF} \cdot \overline{SM} \cdot SR = SL\overline{O}$ | 0 | 0 | 0 | 0 | 1 |

EP 0 102 017 B1

Referring again to Fig. 8, let it be assumed that only the vehicle antenna 25 is positioned within the area of the ground antenna length $L_1$. The receiver 27 receives the wave from the ground antenna 24 only through the vehicle antenna 25 and only the line 30 is caused to go to the high level "1". As a result, the discriminating circuit 100 makes a discrimation of "long-short stopping" and only the line 72 is caused to go to the high level "1".

Assume that only the vehicle antennas 25 and 61 are positioned within the area of the ground antenna length $L_1$. The receiver 27 receives the wave from the ground antenna 24 only through the vehicle antennas 25 and 61 and thus only the lines 30 and 62 are caused to go to the high level "1'. As a result, the discriminating circuit 100 makes a discrimination of "short stopping" and thus only the line 33 is caused to go to the high level "1".

Assume that only the vehicle antenna 61 is positioned within the area of the ground antenna length $L_1$. The receiver 27 receives the wave from the ground antenna 24 only through the vehicle antenna 61 and thus only the line 62 is caused to go to the high level "1". As a result, the discriminating circuit 100 makes a discrimination of "just fixed position stopping" and thus only the line 34 is caused to go to the high level "1".

Assume that only the vehicle antennas 61 and 26 are positioned within the area of the ground antenna length $L_1$. The receiver 27 receives the wave from the ground antenna 24 only through the vehicle antennas 61 and 26 and thus only the lines 62 and 32 are caused to go to the high level "1". As a result, the discriminating circuit 100 makes a discrimination of "overrun stopping" and thus only the line 35 is caused to go to the high level "1".

Assume that only the vehicle antenna 26 is positioned within the area of the ground antenna length $L_1$. The receiver 27 receives the wave from the ground antenna 24 only through the vehicle antenna 26 and thus only the line 32 is caused to go to the high level "1". As a result, the discriminating circuit 100 makes a discrimination of "long-overrun stopping" and thus only the line 73 is caused to to go the high level "1".

The following Table 6 shows the reception conditions of the receiver 27 from the ground antenna 24 through the vehicle antennas 25, 61 and 26 and the discriminations of the discriminating circuit 100 in the above-mentioned cases.

Table 6

| Reception condition | | | Discrimination |
|---|---|---|---|
| Vehicle antenna 25 | Vehicle antenna 61 | Vehicle antenna 26 | |
| 1 | 0 | 0 | Long-short stopping |
| 1 | 1 | 0 | Short stopping |
| 0 | 1 | 0 | Just fixed position stopping |
| 0 | 1 | 1 | Overrun stopping |
| 0 | 0 | 1 | Long-overrun stopping |

The following Table 7 shows the long-short stopping position, the short stopping position, the just fixed stopping position, the overrun stopping position and the long-overrun stopping position and their region lengths in accordance with the ground antenna length $L_1$ and the mounting intervals $L_3$ and $L_4$.

10

Table 7

| Stopping position region | Region length |
|---|---|
| Long-short stopping position | $L_3$ |
| Short stopping position | $L_1-L_3$ |
| Just fixed stopping position | $L_3+L_4-L_1$ |
| Overrun stopping position | $L_1-L_4$ |
| Long-overrun stopping position | $L_4$ |

The ground antenna length $L_1$ and the mounting intervals $L_2$, $L_3$ and $L_4$ can be preset as desired within the above-mentioned ranges. Thus, the long-short stopping position region, the short stopping position region, the just fixed stopping position region, the overrun stopping position region and the long-overrun stopping position region can be preset as desired by suitably changing the ground antenna length $L_1$ and the mounting intervals $L_3$ and $L_4$.

In accordance with another embodiment of the invention, the ground detecting system can be performed with settings of $L_2 \geq L_1$, $L_2 = L_3 + L_4$, $L_1 \geq L_3$ and $L_1 \geq L_4$.

While, in the embodiments described above, the discrimination is effected while the vehicle is at stopped condition, the discrimination can of course be effected while the vehicle is running.

In accordance with another embodiment, the ground antenna may be divided into any other plurality of sections than previously. Also, any other plurality of vehicle antennas than previously may be mounted on the vehicle. Also, the output of the receiver may be applied to the processing circuit without passing through the discriminating circuit. Further, the ground antenna 24 may be arranged along the entire length of the vehicle track.

From the foregoing description it will be seen that in accordance with the present invention, by virtue of the fact that a ground antenna, which is divided into a plurality of sections, is arranged over a predetermined distance to extend along the direction of travel of a vehicle in correspondence to a stopping position where the vehicle is a stop and a plurality of vehicle antennas are mounted on the vehicle such that the interval between the adjacent vehicle antennas in the travel direction is at most less than the predetermined distance whereby the radio waves from the ground antennas are received by the vehicle antennas or the waves from the vehicle antennas are received by the ground antenna within the area of the predetermined distance and the stopped position is discriminated in accordance with the manner of receiving, it is possible to prevent the occurrence of any erroneous discrimination due to the rocking or the like of the vehicle and to accurately detect the stopping position where the vehicle is to stop. Further, the discrimination is effected even during the time that the vehicle is at stopped condition and therefore the stopping position can be accurately detected even after the recovery of the power supply.

**Claim**

A vehicle stopping position detecting system for detecting a stopping position of a vehicle (21) along a track and for stopping said vehicle at said stopping position, said system comprising:

a ground antenna (24) extending over a predetermined distance ($L_1$) along a direction of travel (28) of said vehicle (21) in correspondence with said stopping position, said ground antenna (24) having a transmitting/receiving characteristic with a maximum in a direction substantially perpendicular to the travel direction;

a plurality of vehicle antennas (25, 26, 61) mounted on said vehicle (21) with an interval between adjacent ones thereof in said travel direction (28) less or equal to said predetermined distance ($L_1$), each of said plurality of vehicle antennas (25, 26, 61) being capable of receiving or transmitting a raido wave from or to said ground antenna (24) only when positioned within the region of said predetermined distance ($L_1$);

means (88) connected with the vehicle antennas (25, 26, 61) for discriminating the stopping position of said vehicle (21), characterized in

that said ground antenna (24) is divided into a plurality of independently controlled antenna sections (81, 82) and

that the means (88) for discriminating the stopping position identifies this position by discriminating which of the vehicle antennas (25, 26, 61) is in communication with which of the ground antenna sections (81, 82).


**Patentanspruch**

Erfassungssystem für die Halteposition eines Fahrzeugs zum Erfassen einer Halteposition eines Fahrzeugs (21) längs einer Bahn und um das Fahrzeug an dieser Halteposition zu stoppen, wobei das System umfaßt:

eine Bodenantenne (24), die sich über eine vorbestimmte Länge ($L_1$) längs der Fahrtrichtung (28) des Fahrzeugs (21) entsprechend der Halteposition erstreckt und eine Sende/Empfangscharakteristik mit einem im wesentlichen senkrecht zur Fahrtrichtung gerichtetem Maximum aufweist;

eine Vielzahl von Fahrzeugantennen (25, 26, 61), die an dem Fahrzeug (21) in einem Abstand zwischen benachbarten von ihnen in Fahrtrichtung (28) angebracht sind, der kleiner oder gleich der vorbestimmten Länge ($L_1$) ist, wobei jede dieser Vielzahl von Fahrzeugantennen (25, 26, 61) nur dann in der Lage ist, eine Radiowelle von der Bodenantenne (24) zu empfangen oder zu ihr zu senden, wenn sie sich innerhalb des Gebiets der vorbestimmen Länge ($L_1$) befindet;

eine mit den Fahrzeugantennen (25, 26, 61) verbundene Einrichtung (88) zur Erkennung der Halteposition des Fahrzeugs (21), dadurch gekennzeichnet,

daß die Bodenantenne (24) in eine Vielzahl von unabhängig gesteurten Antennenabschnitten (81, 82) geteilt ist und

daß die Einrichtung (88) zur Erkennung der Halteposition diese dadurch identifiziert, daß sie unterscheidet, welche der Fahrzeugantennen (25, 26, 61) mit welchem der Bodenantennenabschnitte (81, 82) in Verbindung steht.

**Revendication**

Système de détection d'une position d'arrêt d'un véhicule destiné à détecter une position d'arrêt d'un véhicule (21) le long d'un rail et à arrêter ledit véhicule à ladite position d'arrêt, ledit système comprenant:

une antenne de sol (24) s'étendant sur une distance prédéterminée ($L_1$) le long d'une direction de déplacement (28) dudit véhicule (21) en relation avec ladite position d'arrêt, ladite antenne de sol (24) ayant une caractéristique d'émission/réception avec un maximum dans une direction essentiellement perpendiculaire à la direction de déplacement;

plusieurs antennes de véhicule (25, 26, 61) montées sur ledit véhicule (21) avec un intervalle entre les antennes adjacentes dans ladite direction de déplacement (28) intérieur ou égal à ladite distance prédéterminée ($L_1$), chacune desdites antennes de véhicule (25, 26, 61) pouvant recevoir ou émettre un onde radio provenant ou en direction de ladite antenne de sol (24) seulement quand elle se trouve dans la région de ladite distance prédéterminée ($L_1$);

des moyens (88) reliés auxdites antennes de véhicule (25, 26, 61) destinés à déterminer la position d'arrêt dudit véhicule (21), caractérisé en ce que

ladite antenne de sol (24) est divisée en plusieurs sections d'antenne (81, 82) à commande indépendante et

les moyens (88) de détermination de la position d'arrêt identifient ladite position en déterminant laquelle des antennes de véhicule (25, 26, 61) est en communication avec laquelle des sections d'antenne de sol (81, 82).

FIG. I

FIG. 2

FIG. 4

FIG. 3

FIG. 5A

RECEIVER
DISCRIMINATING CIRCUIT
83 84 85 88 21 72 33 34 35 73
25 86 87 26
81 82
51 TRANSMITTER
L₂
L₅ L₆

FIG. 5B

RECEIVER
DISCRIMINATING CIRCUIT
83 84 85 88 21
25 86 87 26
81 82
51 TRANSMITTER

FIG. 5C

RECEIVER
DISCRIMINATING CIRCUIT
83 84 85 88 21 72 33 34 35 73
86 87 26
25
81 82
51 TRANSMITTER

FIG. 5D

RECEIVER
DISCRIMINATING CIRCUIT
83 84 85 88 21 72 33 34 35 73
25 86 87 26
81 82
51 TRANSMITTER

FIG. 5E

RECEIVER
DISCRIMINATING CIRCUIT
83 84 85 88 21 72 33 34 35 73
25 86 87 26
81 82
51 TRANSMITTER

EP 0 102 017 B1

FIG. 7

FIG. 6

FIG. 9

FIG. 8

EP 0 102 017 B1